Europäisches Patentamt

European Patent Office

Office européen des brevets

(19)

(11) EP 1 033 849 A1

(12) **EUROPEAN PATENT APPLICATION**

(43) Date of publication:
06.09.2000 Bulletin 2000/36

(51) Int Cl.7: **H04L 12/56**, H04Q 7/22

(21) Application number: 99400538.7

(22) Date of filing: 05.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **01.03.1999 EP 99400497**

(71) Applicant: **ALCATEL**
**75008 Paris (FR)**

(72) Inventors:
• **Blanc, Patrick**
**92130 Issy les Moulineaux (FR)**
• **De Montgolfier, Rémi**
**75006 Paris (FR)**

(74) Representative: **El Manouni, Josiane et al**
**COMPAGNIE FINANCIERE ALCATEL**
**Dépt. Propr. Industrielle,**
**30, avenue Kléber**
**75116 Paris (FR)**

(54) **Process for controlling access to radio resource for uplink packet transmission in a wireless communication network**

(57)    The invention relates to a process for controlling access to the radio resource for uplink packet transmission in a wireless communication network. Each user equipment is allowed to access the resource at a reduced transmission rate $SF_{init}$, for a given time period $T_{init}$.

Before the end of this time period, the network sends to a new active user equipment an allowed transmission rate. The invention thus allows the network to adapt the transmission rate of each user according to the load of the network.

In the case of a CDMA network, the allowed transmission rate may be sent to each user in the form of an allowed spreading factor $SF_{min}$.

FIG_3

EP 1 033 849 A1

## Description

The present invention relates to the field of wireless communication, and more specifically relates to uplink transmission in a packet service wireless communication system.

Packet services in a wireless communication network have a very bursty source of traffic. They need to have a very fast access to radio resources and transmit with a high bit rate. For packet services, since the traffic is bursty and the radio resource limited, allocating resources to the different users on a permanent basis is hardly feasible. Thus, at any given time, the network usually needs to control multiplexing of all packet users, in order to avoid overload situations; overload may occur if too many users become active at the same time with a high transmission rate. The problem is especially critical for uplink transmission in packet service, because users transmit in an uncoordinated way, according to their traffic source behaviour.

This problem is for instance discussed in EP-A-0 877 512 in the case of a CDMA (code division multiple access) based mobile communication system. The solution proposed in this document is to broadcast mobile access control information from the base station to the mobile stations. Mobile stations then transmit packet to the base station according to the timing information defined in the broadcast mobile access control information.

This solution is difficult to carry out for high bit rate communications; indeed, the base station has to manage the timing of all mobile stations, which is time consuming. In addition, broadcasting the proposed mobile access control information will also use part of the available radio resource.

WO-A-97 19525 discusses a TDMA (time division multiple access) system, according to the GSM/ GPRS specification. This document discusses the use of control algorithms to modify access probabilities. One prior art solution discussed in this document is that the base station broadcasts a value p, and that any ready user transmits with a probability p during any available access burst period. In order to provide different grades of services to different classes of users, this document suggests broadcasting different probabilities for different groups of users. Any user may select the timing of its transmission based on the broadcast probability for his group. Alternatively, access may be allowed or not in a given allowed burst period according to the comparison of a random number to the broadcast probability.

This document does not discuss CDMA-type systems, and does not suggest the use of a similar process for accessing different resources.

The problem of accessing the radio resource, especially for uplink transmission was also discussed for UMTS specification (Universal Mobile Telephone Service). 'UMTS YY.03, description of UE states and procedures in connected mode', version 0.4.0, Tdoc SMG2 UMTS L23 61/99 suggests allocating dedicated channels (or DCH) to packet user, and allowing the users to transmit when they wish to. The UTRAN (UMTS Radio Access Network) may control transmission bit rate of each individual UE (User Equipment) on a slow rate basis through a RRC (Radio Resource Control) procedure. This solution results in a sub-optimal usage of radio resources and extra delay at each transmission, because resource allocation is controlled on a too slow basis. Indeed, the time necessary for sending a message from the UTRAN to the UE may reach 200 ms. Collisions can not be avoided and this may lead to a large retransmission overhead. This scheme will probably prevent packet users from transmitting at high bit rate.

Another solution for UMTS is discussed in 'Benefits of the uplink shared channel USCH', Tdoc SMG2 UMTS L23 47/99, Motorola. According to this scheme, users are allocated a DCH but a fast signalling message in downlink indicates them what bit rate to use at every frame. This solution requires too much signalling overhead, especially for a CDMA system which does not require explicit assignment of physical resources.

'Performance of a joint CDMA/PRMA protocol for mixed voice/data transmission for third generation mobile communication', A.E. Brand, A.H. Aghvami, IEEE Journal on selected areas in communications, vol. 14, No9, December 1996 suggest an uplink protocol for mobile communication systems. According to this protocol, permission probabilities are sent on each downlink packet, for different slots of the next frame. Permission probability for a slot in a given frame is set according to the periodic load in the same slot of the previous frame.

This solution discusses simultaneous periodic and random loads, and suggests setting permission probabilities according to periodic load only. It is therefore not adapted to controlling packet service uplink transmission.

European patent application number 99400497.6 filed on 01.03.99 by the applicant, entitled "Process for controlling uplink packet transmission in a wireless communication network" suggests broadcasting to the user equipments in a CDMA transmission system a maximum transmission rate, at each frame; this document also suggests restricting access to radio resource; in a first embodiment, access to radio resource is controlled by a probabilistic scheme, each user equipment comparing a random number to a broadcast probability level in order to determine whether or not it may access the radio resource. In a second embodiment, access to radio control is allowed to any user at a reduced transmission rate; this allows the network to detect new users, so that the broadcast transmission rate is adapted to the number of users, taking into account new users.

The invention provides a solution to contention of user equipment or mobiles stations for packet service uplink transmission in a CDMA wireless communication network. It provides a simple and efficient solution for lowering interference, and for optimising use of the radio resource.

More specifically, the invention provides a process for controlling access to radio resource on the uplink of a packet service wireless communication system, comprising:

- in a user equipment, starting transmitting at a first transmission rate ;
- in the network, computing a transmission rate allowed for a user equipment, and sending said allowed transmission rate to the user equipment;
- in the user equipment, continuing transmitting at a transmission rate lower than said allowed transmission rate after said transmission rate is received.

In one embodiment, the user equipment transmits at said first transmission rate during a given time period.

In another embodiment, the user equipment transmits at said first transmission rate until it receives said allowed transmission rate.

The process may further comprise, in the network, a step of sending or broadcasting a new allowed transmission rate to user equipments having already received an allowed transmission rate.

Preferably, the step of starting transmitting is repeated by a user equipment at the beginning of each packet.

The invention also provides a wireless communication system carrying out this process, and a user equipment carrying out the user side steps of the process.

A wireless communication system embodying the invention will now be described, by way of non-limiting example, and in reference to the accompanying drawings, where :

- figure 1 is a flowchart of the procedure in the UTRAN according the invention;
- figure 2 is a flowchart of the procedure in the UE according to the invention;
- figure 3 is a representation of the timing of the packet admission control according to the invention;
- figure 4 is a flow diagram between UTRAN and UE according to the invention.

The invention suggests allowing any user to access radio resource, but only at a reduced transmission rate, for a given time period; before the end of this time period, the network sends to the new user an allowed transmission rate for the rest of its transmission - for the rest of the packet in a packet service.

The fact that a new user only accesses radio resource at a reduced transmission rate limits the level of interference created by new user; the fact that this reduced transmission rate is used during a given time period makes it possible for the network to compute and send to the new user an allowed transmission rate.

The invention thus allows optimised sharing of the radio resource between the different user equipments, without preventing transmission by any equipment.

Contrary to the prior art solutions, in which interference is limited by limiting the number of transmitting user equipments - be it on a statistical basis or on an individual basis - the invention suggests limiting the bit rate of the users; in other words, instead of limiting the number of users for avoiding interference, the invention suggests limiting the use of available radio resource by each of the active user equipments.

Contrary to the solution proposed in the application discussed above, the network does not broadcast a transmission rate that applies to all user equipments. It computes and sends a transmission rate that is specific to a new user.

The invention notably applies to UMTS and is described in the rest of the present specification with reference to this type of wireless communication network. It should however be understood that the invention is not limited to this preferred embodiment, and applies to other types of CDMA packet service wireless communication systems, or more generally to transmission systems where a limited resource has to be shared among users. The invention applies particularly to packet service, where the source of traffic is bursty.

UMTS is a CDMA system; as known to the person skilled in the art, is such a system, a spreading factor SF is defined as the ratio W/R of the chip rate W to the transmission rate R of coded signal. Each UE in UMTS is allocated a number of possible codes having different spreading factors. In addition each UE is provided with a user-specific scrambling factor, which is combined to one of the codes for transmission. Transmission rate of a given UE is controlled by selecting the spreading factor used at a given time; the higher the spreading factor, the lower the transmission rate.

According to the invention, a UE may access radio resource at any time, but it will start transmitting at a low transmission rate $SF_{init}$, during a time period $T_{init}$. This time period may be used by the network to compute the allowed transmission rate for this UE, and to send the allowed transmission rate $SF_{min}$ to the UE.. After the time period of $T_{init}$, the UE may thus transmit at the allowed transmission rate $SF_{min}$.

The invention further suggests that a UE releases the radio resource when it is not used for a time period of $T_{out}$.

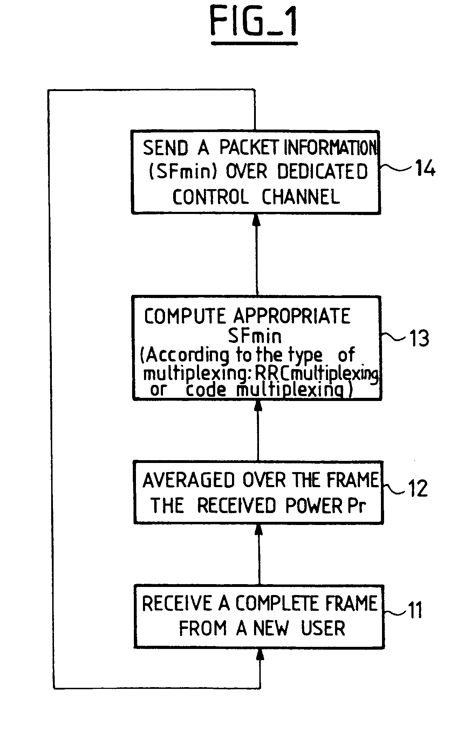

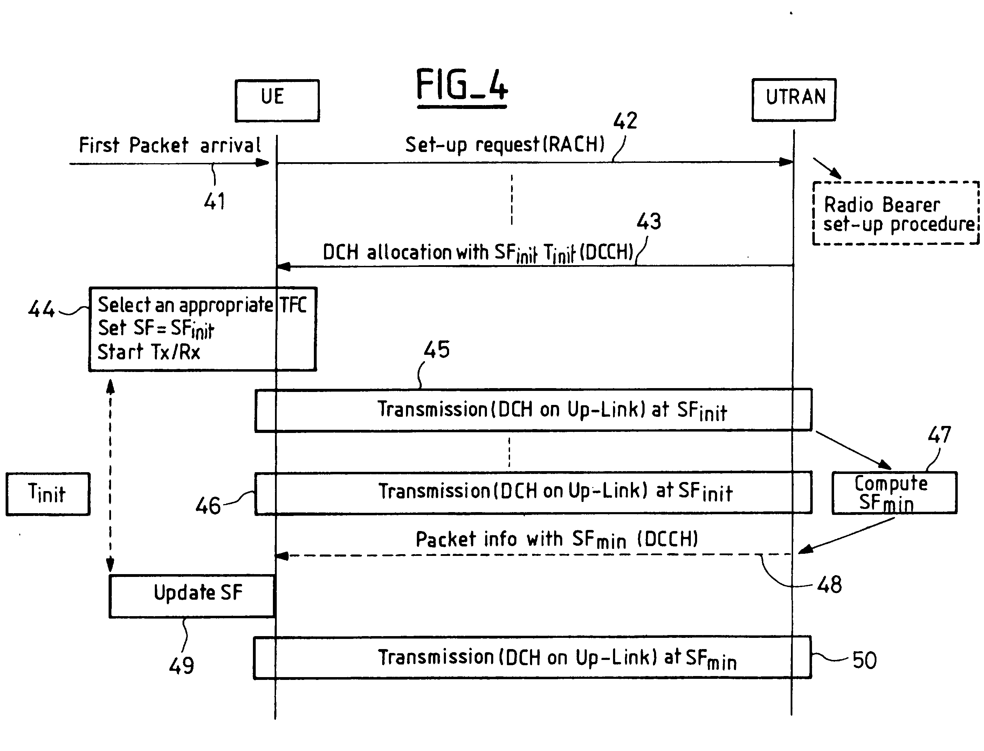

Set-up of the call, that is allocation by the network to a UE of the resource he should access for uplink transmission may be carried out in a way known per se; it is not discussed in detail in the rest of the present specification. For instance, the flowchart of figure 1 does not discuss allocation of a given DPDCH (Dedicated Physical Data Channel) and of a given DPCH (Dedicated Physical Control Channel). It is however briefly mentioned in figure 4.

Figure 1 is a flowchart of the procedure in the UTRAN according to the invention; this procedure may be carried out in the base station or Node B in the UMTS specification; it may also be carried out in the base station controller or RNC (Radio Network Controller) in UMTS. The fact that this procedure is carried out in one or the other of these locations will simply change the length of time necessary for the sending of the allowed transmission rate by the UTRAN

At step 11, a complete frame is received from a new user. The fact that the UTRAN receives a frame at a transmission rate of $SF_{init}$ from a user that previously obtained a DPDCH and a DPCCH is representative of the fact that this user wishes to become active - that is send a packet. The process passes to step 12.

At step 12, the received power is averaged over the last frame, or over some previous frames, so as to compute an estimate of the level of interference. The process passes to step 13.

At step 13, based on the computed level of interference and on the number of active users - which just increased - the network computes an allowed transmission rate $SF_{min}$ for the new user. One simple way to do this is to share uniformly the possible transmission rate among all active users. This can be done by selecting the allowed transmission rate $SF_{min}$ for the new UE so that the following formula is as close as possible to $I_{othreshold}$, while remaining below this threshold :

$$I_o + P_r * (SF_{init} / SF_{min} - 1)$$

where

- $I_o$ is the averaged interference level determined in step 12,
- Pr is the power received from the new UE within the cell, averaged over the last received frame;
- $I_{othreshold}$ is the maximum level of interference that may be accepted in the system.

It is also possible to use a different scheme for computing the allowed transmission rate : for instance, the transmission rate could also be shared according to the location of the UE, or according to their class if classes are defined, etc.

Once the new $SF_{min}$ is computed, the process passes to step 14.

In step 14, the allowed transmission rate $SF_{min}$ is sent to the new UE. This may be done in UMTS over the DCCH (Dedicated Control Channel) for the user. The allowed transmission rate should be sent to the new UE as fast as possible, so that it may be taken into account by the UE before the end of the time period $T_{init}$

for transmission at a reduced transmission rate. In case the computing is carried out in the Node B, the time period $T_{init}$ could be chosen as 20 ms; if the computation is carried out in the RNC, a time period $T_{init}$ around 50 ms is appropriate. This time period could also be user dependent, e. g. dependent on the class of user.

If the average interference $I_o$ is above $I_{othreshold}$, the network may decide to interrupt transmission for the new user, or to change the allowed transmission rate for UEs that previously accessed the radio resource. A new allowed transmission rate could in this case be sent to at least one previous UE, using a dedicated channel or a shared channel. Again, this information may depend on the location of the UEs, or on their class, etc.

After step 14, the process passes to back to step 11, and the UTRAN awaits that a new user appears.

Thus, each time a UE accesses the radio resource at a reduced transmission rate, it is detected, and the UTRAN computes and sends an allowed transmission rate for the UE.

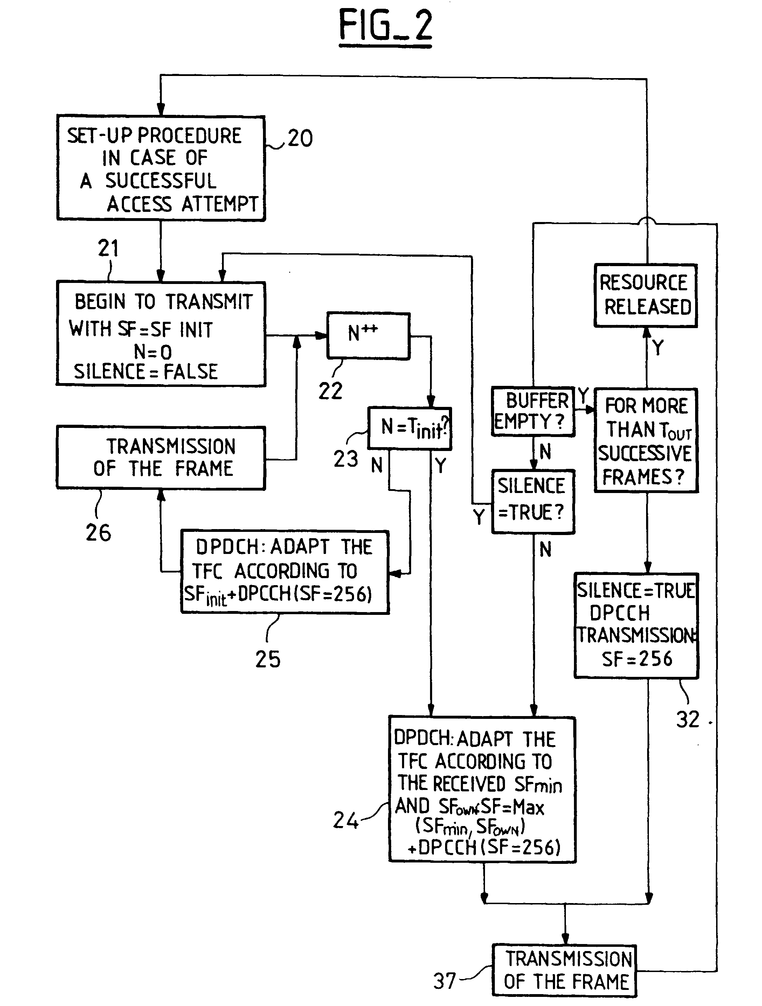

Figure 2 is a flowchart of the procedure in the UE according to the invention; it shows that the UE, for an uplink transmission, starts transmitting at a limited transmission rate $SF_{init}$ for a duration $T_{init}$, before transmitting at the allowed transmission rate sent by the UTRAN. This allows the network to grant a transmission rate $SF_{min}$ to a new UE according to the number of UEs already active, and according to the level of interference. As discussed above, the resource is released when the UE does not transmit for a time period $T_{out}$.

At step 20, the UE is at the beginning of a call, or has to send a packet after a long period, that is after a period longer than $T_{out}$ has elapsed. In other words, the UE is not allocated any transmission channel; a radio-bearer set-up procedure is carried out in step 20, so as to provide the UE with an indication of the resource it may try to access. In UMTS, the result of a successful attempt in step 50 is that the UE is provided with a DPCCH and knows which DPDCH it may try accessing

At step 21, the UE sets up a count variable N for counting the time $T_{init}$. A variable silence is set at a logical False value. The process then passes to step 22.

In step 22, N is increased by one. The process then passes to step 23.

In step 23, it is checked whether N is equal to or higher than $T_{init}$. If this is the case, the process passes to step 24; else, it passes to step 25.

In step 25, it is ascertained that the UE started transmitting less than $T_{init}$ ago. Transmission should therefore start or continue at the first transmission rate $SF_{init}$. The transmission rate is thus chosen so a to comply with the reduced transmission rate used for the beginning of each access. For a CDMA system, choosing a transmission rate amounts to selecting a spreading factor among the spreading factors that are allowed to the UE. In UMTS, a TFC (Transport Format Combination) is selected.

The TFC on the DPDCH is set so as to respect

the limit of $SF_{init}$ for the transmission rate; in addition, signalling occurs at a low transmission rate on the DPCCH. The frame is prepared for transmission, and the process passes to step 26.

In step 26, the frame prepared in step 25 is transmitted. The process then passes to step 22.

This loop corresponds to the transmission of the first frames, at a transmission rate of $SF_{init}$, for a duration of $T_{init}$.

In step 24, it is ascertained that the duration $T_{init}$ has elapsed. In the meantime, the UE has received from the UTRAN the allowed transmission rate $SF_{min}$ computed for it by the UTRAN. A new TFC on the DPDCH is set so as to respect the limit of $SF_{min}$ for the transmission rate; in addition, signalling occurs at a low transmission rate on the DPCCH. The frame is prepared for transmission, and the process passes to step 27.

In step 27, the frame prepared in step 24 or 32 is transmitted. The process then passes to step 28.

In step 28, it is determined whether the transmission buffer is empty or not. If this is not the case, the process passes to step 29, else, it passes to step 30

In step 29, it is checked whether the Silence variable is at a True logical level; if this is the case, transmission should start again at $T_{init}$. The process passes again to step 21. If the Silence variable is a false level, there has been an interruption of transmission so that the process passes to step 24, where a new frame is prepared

In step 30, it is determined that the buffer is empty, so that the packet is finished. The silence variable is set at a True logical level. In addition, the process checks the time period for which the buffer has been empty. While this time period is less that the time period $T_{out}$, the process prepares for every frame signalling for the DPCCH, at the lowest possible speed, see step 32. Else, once the transmission buffer remains empty for a period of time longer than $T_{out}$, the UE stops signalling on the DPCCH, so that the resource is released, step 31.

At step 31, the process goes back to step 20, where the UE waits for the beginning of a call, or for a new packet.

After step 32, where a signalling frame is prepared, the process passes to step 27.

Figure 2 assumes that the number of frames to send at least corresponds to the duration $T_{init}$. Since $SF_{init}$ is normally low enough that the new user transmitting at $SF_{init}$ does not create too much interference, this assumption is likely to be fulfilled. Figure 2 does not show the timing of frames; it is clear that the UE waits for the duration of a frame before sending a new frame.

Figure 2 shows that the UE starts transmitting a packet at $SF_{init}$, for a duration $T_{init}$, and then transmits the rest of the packet at the allowed transmission rate sent by the UTRAN; this is the case for any new packet. In addition, when no frame is transmitted for a duration of $T_{out}$, the resource is released.

Figure 2 does not show the fact that the UTRAN may also send to a UE already transmitting at a given transmission rate a new allowed transmission rate; as discussed above, this could be the case if the radio resource becomes so scarce that the UTRAN decides to change the allowed transmission rate for previous users. In the embodiment of Figure 2, where a UE has to start transmitting at $T_{init}$ at every new packet, it may not be necessary to change the transmission rate allowed to previous users, especially in the mean duration of the packet is not too long as compared to the mean number of new users appearing during the duration of a packet.

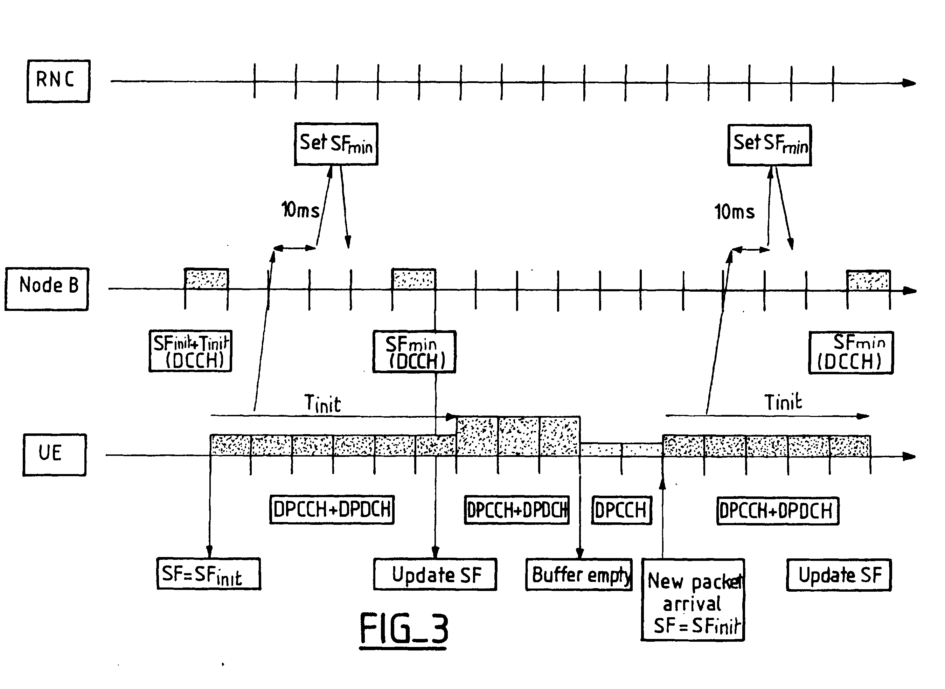

Figure 3 is a representation of the timing of the packet admission control according the invention; the top of figure 3 shows the frame timing in the RNC, where calculation of $SF_{min}$ is taking place. The middle of figure 3 shows the Node B, where frames from new users are received; each time it receives frame from a new user at the transmission rate $T_{init}$, the Node B requests from the RNC a computation of the transmission rate allowed for this user. When it receives the new transmission rate, the Node B sends it to the UE; as discussed, this information may be sent on the DCCH. The bottom of figure 3 shows activity in the UE; in the example, $T_{init}$ corresponds to 5 frames. On figure 5, the UE starts transmitting in the second frame, on the DPCCH and on the DPDCH at $SF_{init}$, for a period of $T_{init}$. It then transmits at $SF_{min}$ for three frames. The UE is then silent for two frames; after these two frames, the UE starts again transmitting a new packet at $SF_{init}$.

Figure 4 is a flow diagram between UTRAN and UE according to the invention; the figure shows the first packet arrival 41 on the UE. The UE, as discussed in step 20 of figure 2, sends a set-up request 42 on the RACH (Random Access Channel); the network then starts the radio-bearer set-up process.

The network then sends back to the UE a packet information 43 on the BCCH or on a fast signalling channel, for indicating the DPCCH and DPDCH to be used by the UE. It may at the same time provide the $SF_{init}$ and $T_{init}$ information.

At 44, the UE then determines the TFC for transmission at $SF_{init}$, and transmits on the dedicated channel at the reduced transmission rate, as shown in 45 and 46.

When the networks receives the first frame at $SF_{init}$, as shown in 47, it computes the new $SF_{min}$, which is sent to the UE at 48.

After $T_{init}$ has elapsed, the UE has received the allowed transmission rate $SF_{min}$ from the UTRAN, and it updates its transmission rate according to this transmission rate, see 49, and sends the end of the packet accordingly, see 50. It is clear that the transmission rate may be lower than the one allowed by the UTRAN.

As discussed above, the allowed transmission rate $SF_{min}$ may change during transmission of the rest of the packet, and the transmission rate would be changed accordingly.

The invention has proved efficient in a simulation; with the following figures. Values assume a noise level of -132 dBW.

$SF_{init}$ : 128
$T_{init}$ : 5 frames
$T_{out}$ : 50 frames

The system simulations carried out with these figures have shown that interference level is kept under a threshold of -96 dBm (6 dB above noise level), while allowing uncoordinated transmission for packet users. In the simulation, there were 15 packet users, the transmission of whom corresponded to a web session, as disclosed in ETSI UMTS 30.03,

The invention may be carried out in the existing UMTS specifications. It mainly requires sending the $T_{init}$ and $SF_{init}$ information to the new UE - unless this information is user-class dependent or is known by the UE through any other mean;

The amount of information to be sent to a new user depends on the number of user classes - if user classes are provided - but may in all cases remain quite small. The maximum transmission rate or minimum spreading factor $SF_{min}$ may be quantified on 4 bits; the initial transmission rate $SF_{init}$ and the corresponding time period could respectively be quantified on 3 or 4 bits and on 4 bits.

The complete transmission procedure on the radio interface could then be specified, as part of a MAC/RRC (Medium Access Control/Radio Resource Control) protocol. On the UE side, specific requirements may be specified for the transmission of packet data according to the proposed scheme. The UE is using a DCH in a particular manner and this may need to be defined as a specific transport channel.

The solution of the invention provides a very simple and robust access control mechanism for packet transmission in uplink direction. It allows as well using high transmission rates, while keeping good control of network load. In a CDMA based system, it allows the Closed Loop Power Control to converge during a low bit rate transmission, before any high data rate transmission. The invention also makes it possible to start transmitting immediately - even if it is with a reduced transmission rate.

It is clear to the person skilled in the art that the preferred embodiments disclosed above may be changed . For instance, a UE could be allowed to continue transmitting more than one packet at the allowed transmission rate $SF_{min}$; the rule for releasing the resource - after $T_{out}$ in the embodiment discussed above - could also be different.

The invention preferably applies to packet service, where the source of traffic is bursty; it may also apply to other types of services, where traffic is not fully foreseeable.

In the preferred embodiments, only one class of UEs is defined. It is also possible to define several classes of UEs, and to provide different computation of the allowed transmission rate for the different classes of UEs. The initial transmission rate $SF_{init}$ and the corresponding duration $T_{init}$ could be user-class dependent.

The invention was discussed in reference to the example of one new user. It clearly applies to the case where several new users appear at the same time. The time period $T_{init}$ could be postponed if the allowed transmission rate is not received from the network in due time. The user equipment may change its transmission rate from $SF_{init}$ to $SF_{min}$ at the time the allowed transmission rate is received, or only at the end of the $T_{init}$ time period.

**Claims**

1. A process controlling access to radio resource on the uplink of a packet service wireless communication system, comprising:

   - in a user equipment, starting transmitting at a first transmission rate ($SF_{init}$);
   - in the network, computing a transmission rate ($SF_{min}$) allowed for a user equipment, and sending said allowed transmission rate to the user equipment;
   - in the user equipment, continuing transmitting at transmission rate (SF) lower than said allowed transmission rate after said transmission rate is received.

2. The process of claim 1, wherein the user equipment transmits at said first transmission rate during a time period ($T_{init}$).

3. The process of claim 1, wherein the user equipment transmits at said first transmission rate until it receives said allowed transmission rate.

4. The process of claim 1, 2 or 3, further comprising in the network, a step of sending or broadcasting a new allowed transmission rate to user equipments having already received an allowed transmission rate.

5. The process of one of claim 1 to 4, wherein said step of starting transmitting is repeated by a user equipment at the beginning of each packet.

6. A wireless communication system carrying out the process of one of claims 1 to 5.

7. A user equipment carrying out the user side steps of the process of one of claims 1 to 5.

# FIG_1

SEND A PACKET INFORMATION (SFmin) OVER DEDICATED CONTROL CHANNEL — 14

COMPUTE APPROPRIATE SFmin (According to the type of multiplexing: RRCmultiplexing or code multiplexing) — 13

AVERAGED OVER THE FRAME THE RECEIVED POWER Pr — 12

RECEIVE A COMPLETE FRAME FROM A NEW USER — 11

# FIG_2

**RNC**

Set SF_min

10ms

**Node B**

SF_init+T_init
(DCCH)

SF_min
(DCCH)

Set SF_min

10ms

SF_min
(DCCH)

T_init

**UE**

T_init

DPCCH+DPDCH

DPCCH+DPDCH

DPCCH

DPCCH+DPDCH

SF=SF_init

Update SF

Buffer empty

New packet
arrival
SF = SF_init

Update SF

$\underline{\text{FIG\_3}}$

EP 1 033 849 A1

# FIG_4

UE — FIG_4 — UTRAN

First Packet arrival — Set-up request (RACH) — 42

41

Radio Bearer set-up procedure

43
DCH allocation with $SF_{init}$ $T_{init}$ (DCCH)

44 — Select an appropriate TFC
Set $SF = SF_{init}$
Start Tx/Rx

45
Transmission (DCH on Up-Link) at $SF_{init}$

$T_{init}$

46 — Transmission (DCH on Up-Link) at $SF_{init}$ — Compute $SF_{min}$ — 47

Packet info with $SF_{min}$ (DCCH)

48

Update SF

49 — Transmission (DCH on Up-Link) at $SF_{min}$ — 50

EP 1 033 849 A1

EP 1 033 849 A1

**European Patent Office**

**EUROPEAN SEARCH REPORT**

Application Number

EP 99 40 0538

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 98 45966 A (QUALCOMM INC) 15 October 1998 * page 6, line 6 - page 7, line 7 * * page 12, line 19 - line 29 * * page 13, line 13 - line 36 * * page 14, line 8 - line 18 * * page 18, line 10 - line 27 * | 1-3,5-7 | H04L12/56 H04Q7/22 |
| X | WO 96 37081 A (ROKE MANOR RESEARCH ;DAVIS SIMON PAUL (GB)) 21 November 1996 * page 4, paragraph 3 - page 5, paragraph 1 * * page 6, paragraph 4 - page 7, paragraph 3 * * page 10, paragraph 4 * * page 11, paragraph 4 * * page 12, paragraph 3 - page 13, paragraph 1 * * page 15, paragraph 3 * | 1-4,6,7 | |
| A | US 5 442 625 A (GITLIN RICHARD DENNIS ET AL) 15 August 1995 * column 4, line 65 - column 5, line 40 * * claims 2,5 * | 1,3,6,7 | TECHNICAL FIELDS SEARCHED (Int.Cl.6) H04L H04Q H04B |

The present search report has been drawn up for all claims

| Place of search | Date of completion of the search | Examiner |
|---|---|---|
| THE HAGUE | 19 May 1999 | Brichau, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 99 40 0538

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-1999

| Patent document cited in search report | | Publication date | Patent family member(s) | | Publication date |
|---|---|---|---|---|---|
| WO 9845966 | A | 15-10-1998 | AU | 7246698 A | 30-10-1998 |
| WO 9637081 | A | 21-11-1996 | CN | 1157083 A | 13-08-1997 |
| | | | EP | 0771510 A | 07-05-1997 |
| | | | JP | 10503357 T | 24-03-1998 |
| US 5442625 | A | 15-08-1995 | CA | 2145708 A | 14-11-1995 |
| | | | EP | 0682423 A | 15-11-1995 |
| | | | JP | 8065273 A | 08-03-1996 |
| | | | US | 5856971 A | 05-01-1999 |

EPO FORM P0459

For more details about this annex : see Official Journal of the European Patent Office, No. 12/82